# FASCICULE DE BREVET EUROPEEN

(11) **EP 0 745 790 B1**
(45) Date de publication et mention de la délivrance du brevet: **08.03.2000**
(21) Numéro de dépôt: 96401125.8
(22) Date de dépôt: 24.05.1996
(51) Int. Cl.: F16H 63/30

(54) **Commande interne de boîte de vitesses de véhicule automobile munie d'un dispositif de freinage de pignons**
Interne Steuerung eines Fahrzeug-Schaltgetriebes mit einer Zahnrad-Bremsvorrichtung
Internal control for a motor vehicle gear box provided with gear pinion braking device

(30) Priorité: 29.05.1995 FR 9506256
(43) Date de publication de la demande: 04.12.1996
(73) Titulaire: AUTOMOBILES PEUGEOT, 75116 Paris (FR); AUTOMOBILES CITROEN, 92200 Neuilly-sur-Seine (FR)
(72) Inventeur: Vitrac, Emmanuel, 92400 Courbevoie (FR)
(74) Mandataire: Gendraud, Pierre

(56) Documents cités:
- EP-A- 0 501 845
- FR-A- 2 263 428
- GB-A- 2 174 465

## Description

L'invention est relative à une commande interne de boîte de vitesses pour véhicule automobile, munie d'un dispositif de freinage de pignons lors du passage en marche arrière à l'arrêt du véhicule.

Elle se rapporte plus précisément aux commandes de vitesses dans lesquelles, pour effectuer ce freinage, des éléments d'engagement de la marche arrière coopérent, dans une première phase de manoeuvre précédant une phase d'engagement, avec des organes d'actionnement d'un synchroniseur associé à un rapport de marche avant, de manière à placer ce synchroniseur à son état de friction propre à freiner les pignons sans provoquer l'engagement de ce rapport.

On connaît par le brevet FR 2 263 428 A ne commande de ce type où les éléments d'engagement de la marche arrière comprennent un doigt fixé à un arbre de commande et coopérant, lors de la manoeuvre pour le passage de la marche arrière, avec des organes mobiles d'engagement d'un pignon baladeur correspondant, tandis que dans une première phase de cette manoeuvre, précédant une phase d'engagement, un autre doigt également fixé à l'arbre de commande coopère avec un manchon porté par un axe coulissant d'une fourchette d'actionnement d'un synchroniseur de marche avant.

On connait egalement une commande interne de boîte de vitesses, avec toutes les caracteristiques du preambule de la revendication 1, voir le document GB 2 174 465 A.

Ce manchon est monté coulissant sur l'axe et relié à lui par un moyen d'arrêt axial effaçable par lequel le manchon entraîne le synchroniseur pendant la première phase et coulisse sur l'axe pendant la seconde phase, tandis que le retour du synchroniseur à son état inactif ne s'effectue qu'en fin de cette seconde phase, d'où résulte un freinage de pignons parfois excessif pouvant nuire à l'engagement des dentures du pignon baladeur avec un pignon associé.

Par ailleurs, le premier doigt de commande et le synchroniseur étant reliés entre eux par l'intermédiaire de nombreuses pièces, leur position relative présente une dispersion importante due aux tolérances de fabrication de ces pièces. Il en résulte que la mise en action du synchroniseur est peu précise, pouvant provoquer un freinage de pignons excessif ou insuffisant.

L'invention vise à réaliser une commande du type précédent, dans laquelle les inconvénients susmentionnés soient évités ou réduits.

Elle concerne une commande interne de boîte de vitesses pour véhicule automobile dans laquelle des éléments d'engagement d'un rapport de marche arrière comportent un doigt de commande et coopèrent, dans une première phase de manoeuvre précédant une phase d'engagement de ce rapport, avec des organes d'actionnement d'un synchroniseur de marche avant de manière à placer celui-ci en état de friction propre à freiner des pignons de la boîte de vitesses.

Cette commande est caractérisé en ce que le doigt de commande coopérant avec des crosses de fourchettes comporte lui-même un second doigt propre à pousser directement, uniquement dans la première phase de manoeuvre, avec un poussoir éclipsable porté par une fourchette d'actionnement du synchroniseur, celle-ci étant associée à un moyen élastique apte à la rappeler avant l'engagement de la marche arrière en position où le synchroniseur est inactif.

Selon quelques caractéristiques intéressantes de l'invention :
- le poussoir est pivotant et mis en position stable contre une butée par un ressort de rappel, et les déplacements relatifs du second doigt et de la fourchette lors des manoeuvres d'engagement et de dégagement de la marche arrière sont tels que dans la première phase le second doigt prend appui sur une face extrême du poussoir qui est perpendiculaire à l'axe de la fourchette tournée vers le second doigt et proche de ce dernier quand la commande est au point mort, de manière à le maintenir dans sa position stable en entraînant la fourchette jusqu'à la position de friction du synchroniseur, dans la seconde phase ce doigt est écarté du poussoir, et lors du dégagement ce doigt intercepte le poussoir en l'éclipsant par pivotement à l'encontre du ressort de rappel ;
- le poussoir et les doigts pivotent respectivement sur deux axes parallèles, perpendiculaires à la direction de déplacement de la fourchette ;
- la fourchette est montée coulissante sur un axe fixe et reliée à celui-ci par le susdit moyen élastique de rappel, constitué par une bille poussée par un ressort sur une face inclinée.

Un mode de réalisation d'une commande selon l'invention est décrit ci-après avec référence aux dessins annexés parmi lesquels :
- la figure 1 est une vue en coupe, selon la ligne I-I de la figure 2, d'une partie de la commande ;
- les figures 2 et 3 sont des vues de gauche par rapport à la figure 1 de la commande en diverses positions de fonctionnement, avec coupes axiales partielles d'éléments de cette commande.
- On voit sur ces figures, dans un carter 1 d'une boîte de vitesses pour véhicule automobile, un arbre de commande 2 pouvant coulisser et pivoter, respectivement pour assurer la sélection et le passage (ou engagement) de plusieurs rapports.

A cet effet, deux doigts 3 et 4 fixés à l'arbre 2 sont propres à entraîner l'un (3) un basculeur 5 d'entraînement d'un pignon baladeur 6 de marche arrière, et l'autre (4) divers éléments connus d'engagement de rapports de marche avant, tels qu'une fourchette 7 montée coulissante sur un axe fixe 8 orthogonal à l'arbre 2. L'entraînement alternatif de ces éléments et du basculeur s'effectue par engagement de l'un des doigts dans l'une de plusieurs encoches 9, 10 agencées chacune dans une crosse, telle que celles repérées 11 pour la marche arrière et 12 pour le rapport de 4ème correspondant à la fourchette 7, laquelle est rigidement solidaire de la crosse 12.

Une pièce d'interverrouillage usuelle 13, solidaire axialement de l'arbre 2 et immobile en rotation dans le carter 1, est agencée de manière à immobiliser les autres crosses que celle correspondant au rapport engagé ou en cours d'engagement ou de dégagement.

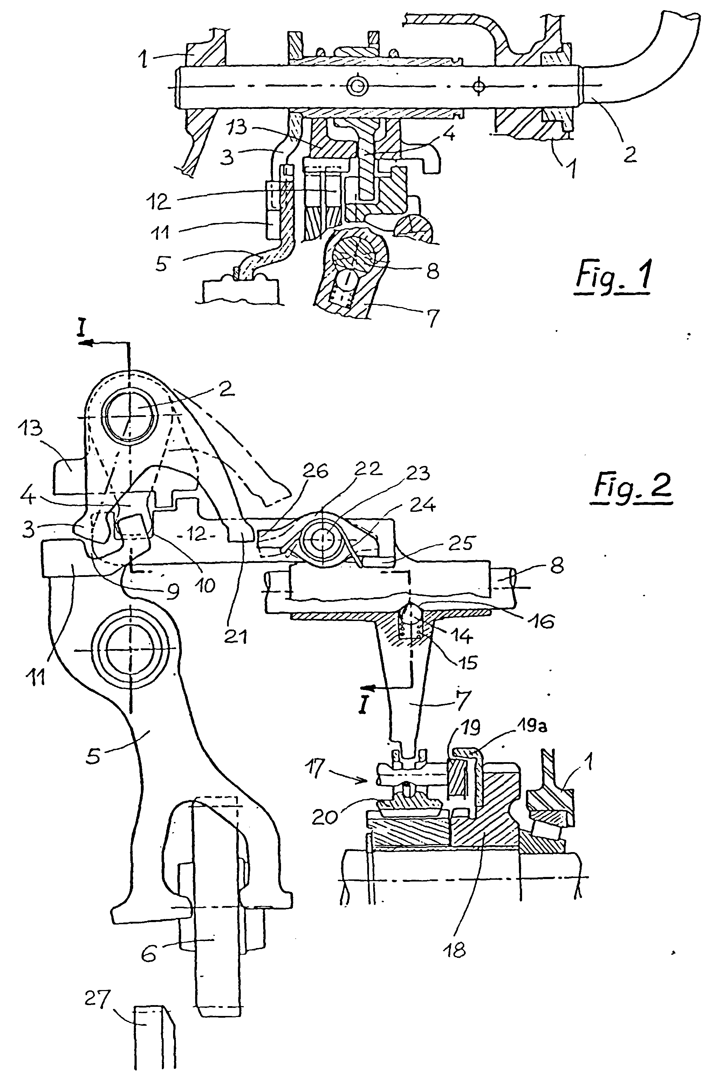

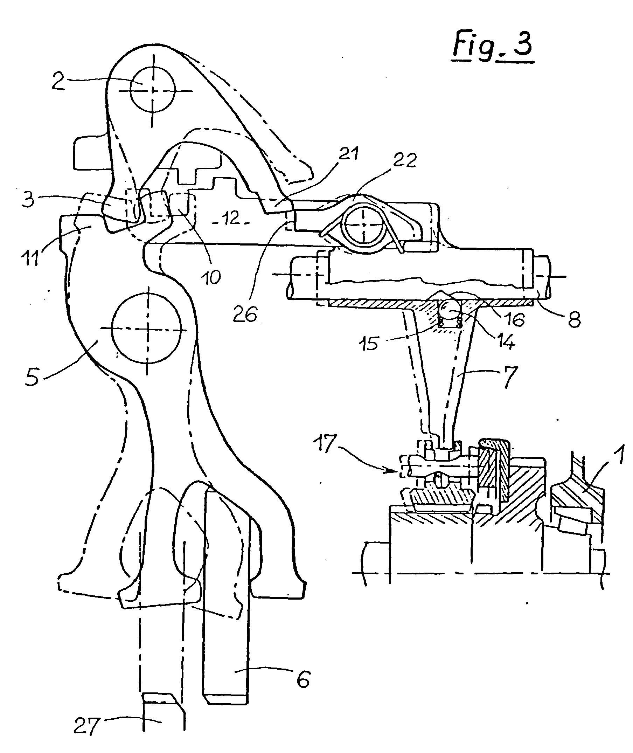

La fourchette 7 est reliée à l'axe 8 par un dispositif connu à bille 14 poussée par un ressort 15 sur le fond formant un V d'une saignée 16 de l'axe, de manière à maintenir la fourchette en position neutre -représentée à la figure 2- de dégagement au rapport de 4ème, où un synchroniseur 17 d'un pignon 18 correspondant est à l'état inactif. Pour l'engagement de ce rapport, un déplacement vers la droite (sur les figures 2 et 3) de la fourchette provoque successivement la friction d'une bague 19 sur un cône 19a du synchroniseur et le crabotage d'un manchon 20 avec le pignon 18.

Selon l'invention, le doigt 3 de passage en marche arrière est solidaire, par exemple par réalisation en une seule pièce, d'un second doigt 21 propre à coopérer avec un poussoir éclipsable 22 porté par la fourchette 7 sur un axe de pivotement 23 parallèle à l'arbre 2. Ce poussoir est maintenu par un ressort 24 dans une position stable où il prend appui sur une butée 25 solidaire de la fourchette 7 et de la crosse 12 et où il présente une face d'extrémité 26 perpendiculaire à l'axe 8 tournée vers le second doigt 21 et proche de ce dernier quand la commande est au point mort.

Les positions relatives du doigt 21 et du poussoir 22 ainsi que de leurs axes respectifs de pivotement 2 et 23 sont telle que lors de la manoeuvre pour le passage en marche arrière le basculement des doigts 3 et 21 dans le sens anti-horaire aux figures 2 et 3 provoque :
- en une première phase, une mise en appui et une poussée du doigt 21 sur la face 26 du poussoir assurant le maintien de celui-ci en position stable et provoquant un coulissement de la fourchette 7 jusqu'à sa position de la figure 3 (en traits pleins) où elle place le synchroniseur 17 en état de friction apte à freiner, de façon connue, des pignons de la boîte de vitesses si le véhicule est à l'arrêt, sans provoquer le crabotage du manchon 20 avec le pignon 18;
- en une deuxième phase, l'écartement du doigt 21 par rapport à la face 26 du poussoir, ce doigt oscillant de la position visible (à la figure 3) en traits pleins jusqu'à la position visible en traits mixtes où le basculeur 5, entraîné par le doigt 3, a provoqué l'engrènement du pignon baladeur 6 avec un pignon associé 27 c'est-à-dire l'engagement de la marche arrière.

Par ailleurs, la saignée 16 est assez étendue axialement sur l'axe fixe 8 pour qu'en fin de première phase (en traits pleins à la figure 3) la bille 14 soit encore en appui sur le fond incliné de la saignée, d'où résulte le rappel vers la gauche de la fourchette 7, avec le poussoir 22 et la crosse 12, dès que le doigt 21 s'écarte du poussoir. L'état de friction du synchroniseur -et par suite le freinage des pignons- est ainsi immédiatement interrompu, avant l'engagement du pignon baladeur 6 avec le pignon associé 27 ; cet engagement s'en trouve facilité.

Lors du dégagement de la marche arrière par basculement des doigts 3 et 21 dans le sens horaire, le doigt 21, en revenant de sa précédente position à sa position initiale de point mort (respectivement en traits mixtes et en traits pleins à la figure 2), intercepte le poussoir 22 et l'éclipse par basculement à l'encontre du ressort 24, qui le rappelle en position stable quand le doigt 21 atteint sa position de point mort.

La commande ainsi réalisée pour le passage en marche arrière avec freinage de pignons s'avère particulièrement précise grâce au fait que peu de pièces sont interposées entre le doigt 3 d'entraînement du basculeur 5 et la fourchette 7 d'entraînement du synchroniseur de 4ème. De plus, ces pièces n'introduisant que peu de frottement lors des manoeuvres, celles-ci s'effectuent avec un bon rendement mécanique.

## Revendications

1. Commande interne de boîte de vitesses pour véhicule automobile dans laquelle des éléments d'engagement d'un rapport de marche arrière comportent un doigt de commande (3) et coopèrent, dans une première phase de manoeuvre précédant une phase d'engagement de ce rapport, avec des organes d'actionnement d'un synchroniseur de marche avant de manière à placer celui-ci en état de friction propre à freiner des pignons de la boîte de vitesses,
caractérisée en ce que le doigt de commande (3) coopérant avec des crosses de fourchettes (11, 12) comporte lui-même un second doigt (21) propre à pousser directement, uniquement dans la première phase de manoeuvre, un poussoir éclipsable (22) porté par une fourchette (7) d'actionnement du synchroniseur (17), celle-ci étant associée à un moyen élastique (14-16) apte à la rappeler avant l'engagement de la marche arrière en position où le synchroniseur est inactif.

2. Commande selon la revendication 1,
caractérisée en ce que le poussoir (22) est pivotant et mis en position stable contre une butée (25) par un ressort de rappel (24), et les déplacements relatifs du second doigt (21) et de la fourchette (7) lors des manoeuvres d'engagement et de dégagement de la marche arrière sont tels que dans la première phase le second doigt (21) prend appui sur une face extrême (26) du poussoir (22) qui est perpendiculaire à l'axe de la fourchette tournée vers le second doigt et proche de ce dernier quand la commande est au point mort, de manière à le maintenir dans sa position stable et à entraîner la fourchette jusqu'à l'état de friction du synchroniseur, dans la seconde phase ce doigt (21) est écarté du poussoir (22), et lors du dégagement ce doigt intercepte le poussoir en l'éclipsant par pivotement à l'encontre du ressort de rappel (24).

3. Commande selon la revendication 1 ou 2,
caractérisée en ce que le poussoir (22) et les doigts (3,21) pivotent respectivement sur deux axes parallèles (23,2), perpendiculaires à la direction de déplacement de la fourchette (7).

4. Commande selon l'une des revendications précédentes,
caractérisée en ce que la fourchette (7) est montée coulissante sur un axe fixe (8) et reliée à celui-ci par le susdit moyen élastique de rappel, constitué par une bille (14) poussée par un ressort (15) sur une face inclinée (16).

## Patentansprüche

1. Interne Steuerung eines Fahrzeug-Schaltgetriebes, bei der Elemente zum Einlegen eines Rückwärtsgangs einen Steuerfinger (3) aufweisen und in einer ersten Betätigungsphase vor einer Phase des Einlegens dieses Gangs mit Betätigungseinrichtungen einer Vorwärtsgang-Synchronisiereinrichtung zusammenwirken, um diese in einen Reibungszustand zu versetzen, der Zahnräder des Schaltgetriebes bremsen kann,
dadurch gekennzeichnet, daß der mit Gabel-Kreuzköpfen (11, 12) zusammenwirkende Steuerfinger (3) selbst einen zweiten Finger (21) aufweist, der direkt nur in der ersten Betätigungsphase einen einziehbaren Stößel (22) drücken kann, der auf einer Betätigungsgabel (7) der Synchronisiereinrichtung (17) sitzt, wobei die Gabel einem elastischen Mittel (14-16) zugeordnet ist, das sie vor dem Einlegen des Rückwärtsgangs in die Position zurückstellen kann, in der die Synchronisiereinrichtung inaktiv ist.

2. Steuerung nach Anspruch 1, dadurch gekennzeichnet, daß der Stößel (22) schwenkbar ist und durch eine Rückholfeder (24) in eine stabile Stellung gegen einen Anschlag (25) gebracht wird, und daß die relativen Verschiebungen des zweiten Fingers (21) und der Gabel (7) bei den Vorgängen des Einlegens und des Auskuppelns des Rückwärtsgangs derart sind, daß in der ersten Phase der zweite Finger (21) auf einer Endfläche (26) des Stößels (22) aufliegt, die senkrecht zur Achse der zum zweiten Finger gerichteten Gabel und nahe bei diesem Finger liegt, wenn die Steuerung im Leerlauf ist, um ihn seiner stabilen Stellung zu halten und die Gabel bis in den Reibungszustand der Synchronisiereinrichtung zu bringen, in der zweiten Phase dieser Finger (21) vom Stößel (22) entfernt wird und beim Auskuppeln dieser Finger den Stößel anhält, indem er ihn durch Schwenken gegen die Wirkung der Rückholfeder (24) einzieht.

3. Steuerung nach Anspruch 1 oder 2, dadurch gekennzeichnet, daß der Stößel (22) und die Finger (3, 21) je um zwei parallele Achsen (23, 2) senkrecht zur Verschieberichtung der Gabel (7) schwenken.

4. Steuerung nach einem der vorhergehenden Ansprüche, dadurch gekennzeichnet, daß die Gabel (7) gleitend auf einer ortsfesten Achse (8) montiert und mit dieser über das erwähnte elastische Rückholmittel verbunden ist, das aus einer Kugel (14) besteht, die von einer Feder (15) auf einer schrägen Fläche (16) geschoben wird.

## Claims

1. Internal control of a motor vehicle gearbox in which the elements for engaging a reverse gear ratio comprise a control arm (3) and co-operate, in a first handling phase preceding a phase of engaging this ratio, with members for actuating a forward gear synchroniser so as to place the latter in a friction state capable of braking the pinion gears of the gearbox,
characterised in that the control arm (3) co-operating with fork crossheads (11, 12) itself comprises a second arm (21) capable of pushing directly, solely in the first handling phase, a retractable push rod (22) carried by a fork (7) for actuating the synchroniser (17), said synchroniser being associated with a resilient means (14-16) capable of returning it before the engagement of the reverse gear in the position where the synchroniser is inactive.

2. Control according to Claim 1,
characterised in that the push rod (22) is pivoting and is put into a stable position against a stop (25) by a return spring (24), and the relative displacements of the second arm (21) and of the fork (7) during manoeuvres for engaging and disengaging the reverse gear are such that in the first phase the second arm (21) bears against an outer face (26) of the push rod (22), which is perpendicular to the axis of the fork facing the second arm and close to the latter when the control is in the dead centre position, so as to hold it in its stable position and to drive the fork as far as the friction state of the synchroniser, in the second phase this arm (21) is moved away from the push rod (22), and during disengagement this arm intercepts the push rod, retracting it by pivoting against the return spring (24).

3. Control according to Claim 1 or 2,
characterised in that the push rod (22) and the arms (3, 21) pivot respectively on two parallel axes (23, 2) perpendicular to the direction of displacement of the fork (7).

4. Control according to one of the preceding claims, characterised in that the fork (7) is mounted so as to slide over a fixed axis (8) and connected thereto by the aforementioned resilient return means, constituted by a ball (14) pushed by a spring (15) over an inclined face (16).
